## Europäisches Patentamt
## European Patent Office
## Office européen des brevets

(19)

(11) Veröffentlichungsnummer: **0 282 552**
**B1**

(12)                 **EUROPÄISCHE PATENTSCHRIFT**

(45) Veröffentlichungstag der Patentschrift: **12.12.90**

(51) Int. Cl.⁵: **G 01 F 1/84**

(21) Anmeldenummer: **87906176.0**

(22) Anmeldetag: **03.09.87**

(86) Internationale Anmeldenummer:
**PCT/EP87/00495**

(87) Internationale Veröffentlichungsnummer:
**WO 88/02105 24.03.88 Gazette 88/07**

(54) **MASSENDURCHFLUSSMESSGERÄT FÜR STRÖMENDE MEDIEN MIT EINRICHTUNGEN ZUR ERMITTLUNG DER CORIOLISKRAFT.**

(30) Priorität: **18.09.86 EP 86201605**

(43) Veröffentlichungstag der Anmeldung:
**21.09.88 Patentblatt 88/38**

(45) Bekanntmachung des Hinweises auf die
Patenterteilung:
**12.12.90 Patentblatt 90/50**

(84) Benannte Vertragsstaaten:
**DE FR GB IT NL**

(56) Entgegenhaltungen:
**GB-A-2 110 439**
**US-A-4 187 721**

**Patent Abstracts of Japan Band 7 Nr. 152 (P208)
(1297), 5 Juli 1983, & JP, A, 5863817**

(73) Patentinhaber: **Krohne AG
Schützenmattstrasse 43
CH-4003 Basel (CH)**

(72) Erfinder: **STUMM, Wolfgang
Gumpperweg 14
D-7410 Reutlingen (DE)**
Erfinder: **CHRIST, Herbert
Heidenheimerstrasse 47
D-7410 Reutlingen (DE)**
Erfinder: **KELLAWAY, Mike
23 Kinnairdway
Cambridge CB1 4SN (GB)**

(74) Vertreter: **Gesthuysen, Hans Dieter, Dipl.-Ing.
Patentanwälte Gesthuysen + von Rohr
Huyssenallee 15 Postfach 10 13 33
D-4300 Essen 1 (DE)**

Courier Press, Leamington Spa, England.

**Beschreibung**

Die Erfindung betrifft ein Massendurchflußmeßgerät für strömende Medien mit Einrichtungen zur Ermittlung der Corioliskraft, bestehend aus wenigstens einer Rohrschleife, die mit ihren beiden Schenkeln an einem massiven Lagerblock befestigt sowie mit einem Schwingungserzeuger, seitlichen Sensoren, welche die mechanischen Schwingungen der Rohrschleife in analoge elektrische Wechselspannungssignale umsetzen und mit einer zweikanaligen electronischen Schaltungsanordnung versehen ist, welche aus den Wechselspannungssignalen ein dem Masserdurchfluß proportionales Meßsignal bildet.

Zur Messung des Masseflusses eines strömenden Mediums sind Meßgeräte bekannt, welche eine auf das strömende Medium entwirkende Corioliskraft ermitteln. Es handelt sich hierbei um eine Trägheitskraft, die zusätzlich zur Zentrifugalkraft auf einen Massepunkt einwirkt, der sich in einem auf einer Kreisbahn laufenden Bezugssystem bewegt. Ein für strömende Medien geeignetes Meßgerät kann beispielsweise aus einem schwingungsfähigen U-förmigen Rohrstück bestehen, dessen Zu- und Abflußenden in einem massiven Lagerblock eingespannt sind. Wird dieses an seinem Bogenende senkrecht zu der von dem U-förmigen Rohrstück begrenzten Fläche in Schwingungen versetzt, verursachen die auf die beiden Schenkel des U-förmigen Rohrstücks einwirkenden Corioliskräfte des durchströmenden Mediums hin- und hergehende Verdrehungen des U-förmigen Rohrstücks um eine Achse, die mitten zwischen den beiden Schenkeln und parallel zu diesen liegt. Das Maß dieser Verdrehungen wird durch geeignete Sensoren ermittelt, die im Bereich der beiden Schenkel angeordnet sind und aus deren Meßsignalen die Durchflußmenge berechnet wird. Ein solches Gerät ist beispielsweise aus der US—PS 4187721 bekannt und weist ein U-förmiges Rohr und eine T-förmige Blattfeder auf, welche die Arme einer Stimmgabel bilden. Die T-förmige Blattfeder trägt an ihrem freien Ende einen Schwingungserzeuger, der auf das freischwingende Ende des U-förmigen Rohres einwirkt, so daß das U-förmige Rohr und die Blattfeder ähnlich einer Stimmgabel in entgegengesetzter Richtung in Eigenfrequenz schwingen. Aus der DE—PS 28 22 087 sind zur Erhöhung der Empfindlichkeit zwei U-förmige Rohrschleifen vorgesehen, die nacheinander in gleicher Richtung vom Medium durchströmt werden. Der Schwingungserreger ist an den freien Enden der U-förmigen Rohre angegracht, und die die Verdrehungen messenden Aufnehmer sind an beiden U-förmigen Rohren befestigt. Einen ähnlichen Aufbau haben auch die Ausführungen, die in der DE—OS 29 38 498, der DE—OS 30 07 361 und der DE—OS 30 46 793 beschrieben sind.

Bei den vorgenannten Ausführungen finden Sensoren in der Art von Lichtschranken o. dgl. Verwendung, welche Schaltsignale auslösen, wenn die mechanisch mitschwingenden Sensorenbauteile durch die Nullage geführt werden. Durch eine elektronische Schaltung wird der Zeitunterschied zwischen den Nulldurchgängen der seitlichen Sensoren ermittelt; dieser Zeitunterschied ist dem Massefluß des durch die U-förmige Schleife strömenden Mediums direkt proportional. Aus der EP—A1 0083144 ist weiterhin die Verwendung von Sensoren bekannt, welche die mechanischen Schwingungen in analoge sinusförmige Signale umwandeln, aus denen mittels einer elektronischen Schaltung ebenfalls eine dem Massedurchfluß proportionale Zeitdifferenz ermittelt wird. Diese Ausführungen sind in nachteiliger Weise nicht frequenzselektiv. Die überlagerten Störsignale aus der Turbulenz der Fluidströmung oder Bewegungen der Rohrleitungen können den rein sinusförmigen Verlauf und damit die Messung der Zeitverschiebung zwischen den Nulldurchgängen stark stören. Der Einsatz von elektronischen Filtern in den beiden Signalkanälen verbietet sich in der Regel, da die Zeit- bzw. Phasenverschiebungen sehr klein sind (Größenordnung einige Mikrosekunden) und durch z.B. unterschiedliche thermische Drifts der beiden Filter stark verfälscht werden können. Schließlich können nur zwei Messungen pro Periode durchgeführt werden, was bei den verwendeten relativ niedrigen Frequenzen zwischen 60 und 100 Hz zu maximal 200 Messungen pro Sekunde führt und damit den Informationsinhalt der Meßsignale nur unvollkommen nutzt.

Zur Beseitigung dieser Nachteile sieht die Erfindung vor, daß bei einem Gerät der eingangserwähnten Art die momentanen Spannungswerte der Wechselspannungssignale mittels je eines Analog/Digitalwandlers in digitale Meßwerte umgesetzt und einem Mikrorechner zugeführt werden, der die digitalisierten Meßwerte einer Fouriertransformation unterwirft, indem er diese mit den der Abtastung entsprechenden Sinus- und Cosinuswerten multipliziert und diese Multiplikationswerte summiert.

Dieses Massendurchflußmeßgerät hat den Vorteil, daß anstelle der Zeitdifferenz die kartesischen Komponenten der Signalvektoren ermittelt und ausgewertet werden. Das Gerät ermöglicht eine stark frequenzselektive Auswertung zur Unterdrückung externer Störungen sowie eine direkte Ermittlung der durch die Corioliskraft bewirkten Zusatzsignale. Die kartesischen Vektorkomponenten der Signalvektoren werden mit Hilfe eines digitalen Mikrorechners durch eine digitale Fourier-Transformation aus den Meßsignalen extrahiert und ausgewertet. Gemessen werden die sinusförmigen Schwingungen, die sich aus der Summe der durch die Erregung verursachten Schwingungen und der durch den Massedurchfluß infolge von Coriolisbeschleunigungen einwirkenden, um +90 bzw. −90 phasenversetzten Kräfte zusammensetzen.

Aus den entsprechenden von den beiden Sensoren erzeugten, sinusförmig verlaufenden Wechselspannungssignalen werden die momentanen Spannungswerte in einer vorgegebenen Abtastfrequenz abgefragt. Hierfür liefert der Mikrorechner eine Abtastfrequenz, die etwa ein Vielfaches der Frequenz der Wechselspannungssignale ist. Nach Abtastung von z.B. einer einzigen Periode beider Kanäle und der der Fouriertransformation entsprechenden Multiplikationswerte stehen vier Meßsignalgruppen zur Verfügung, aus denen die Corioliskraft berechnet wird.

2

**EP 0 282 552 B1**

Die Frequenzselektivität des Verfahrens wächst mit steigender Zahl von Perioden, die in der Transformation berücksichtigt werden, erheblich an. Daher ist es zweckmäßig, für die Auswertung einen Zeitbereich auszuwählen, der mehrere Perioden umfaßt. Um bereits multiplizierte Meßwerte innerhalb eines Zeitbereichs nicht wiederholt multiplizieren zu müssen, steuert der Mikrorechner die Abtastung derart, daß die innerhalb eines vorgegebenen Zeitabschnittes gespeicherten Multiplikationswerte fortlaufend bei jeder Abtastung durch entsprechende neue Multiplikationswerte ergänzt werden und die entsprechenden, ältesten gespeicherten Multiplikationswerte substrahiert werden.

Dabei bleiben in der Fourier-Transformation alle im Überlappungsbereich des Zeitabschnittes liegenden Meßwerte erhalten, die neu hinzukommenden Werte werden der Transformationssumme hinzugezählt und die aus dem Intervall herausfallenden abgezogen. Anstelle einzelner Meßwerte können auch Gruppen aufeinanderfolgender Meßwerte in der beschriebenen Weise verwendet werden. Der Mikrorechner multipliziert hierbei die einzelnen Meßsignalgruppen eines jeden Kanals mit den der Abtastung entsprechenden Sinus- und Cosinuswerten, so daß also vier Wertgruppen gebildet werden, die in der Abtastfolge im Mikrorechner geordnet abgelegt werden. Zur Bildung eines neuen Meßwertes werden die ältesten gelöscht und durch die neuen Meßwerte ersetzt. Es existiert also ein Feld mehrfach mitbenutzter Meßwerte (Overlap-Processing).

Der Mikrorechner ist weiterhin so ausgebildet, daß er die Abtastfrequenz grob aus der Frequenz der Meßsignale ableitet und sie anhand der Ergebnisse der Fouriertransformation während des gesamten Meßvorganges auch bei einer Änderung der Schwingungsfrequenz durch Dichteänderung des Meßmediums geeignet nachregelt.

Die Umwandlung der elektrischen Wechselspannungssignale in digitale Meßwerte kann mit Hilfe verschiedener Bauelemente geschehen. Eine besonders zweckmäßige Ausführung sieht vor daß von den Wechselspannungssignalen mit einer vorgegebenen Abtastfrequenz fortlaufend die zu gleichen Zeitpunkten jeweils vorhandenen Amplituden von je einem Sample- and Hold-Verstärker aufgenommen und mittels eines Analog-Digitalwandlers in digitale Meßwerte umgewandelt werden. Zur Unterdrückung von Spiegelfrequenzen sollte die Abtastfrequenz möglichst hoch gewählt werden. Eine solche Maßnahme findet aber ihre Grenze in der Leistungsfähigkeit wirtschaftlich geeigneter Mikrorechner. Deshalb sind die Kanäle der beiden mittels eines Eingangsverstärkers verstärkten Wechselspannungssignale zweckmäßig über ein Antialiasing-Filter an den betreffenden Sample- und Hold-Verstärker angeschlossen.

Zum Ausgleich etwaiger Unterschiede zwischen den beiden die Wechselspannungen liefernden Kanälen sind diese mit einem vom Mikrorechner gesteuerten Kanalumschalter ausgestattet, der die beiden Meßsignale in bestimmten Zeitabständen wechselweise, d.h. über Kreuz den Verarbeitungskanälen zuführt. Doch werden die gewechselten Signale im Rechner wieder dem ursprünglichen Kanal zugeordnet. Zweckmäßig sind die Ausgänge der Sample- and Hold-Verstärker über einen Multiplexer an den Analog/Digitalwandler angeschlossen, so daß eine wechselweise Eingabe der beiden Kanalsignale in den Analog/Digitalwandler erfolgen kann. Weiterhin kann der Ausgang des Analog/Digitalwandlers über einen Pufferspeicher FIFO an den Mikrorechner angeschlossen sein.

Eine Umwandlung der elektrischen Wechselspannungssignale in digitale Meßwerte kann nach einer anderen Ausführung dadurch geschehen, daß jeweils ein Komparator die Wechselspannungssignale mit der Ausgangsspannung eines Digital/Analogwandlers vergleicht und den Zählrichtungseingang eines binären Synchronzählers schaltet, dessen Zählerstand den binären Eingangswert des Digital/Analogwandlers bildet und dem Mikrorechner zugeführt wird. Hierfür ist vorzugsweise der Zählrichtungseingang des binären Synchronzählers über einen Multiplexer an die Komparatoren angeschlossen und der Ausgang des binären Synchronzählers über einen Pufferspeicher an den Mikrorechner angeschlossen.

Die Erfindung ist in der Zeichnung beispielsweise dargestellt; es zeigt:

Fig. 1 ein Massendurchflußmeßgerät in einer perspektivischen Darstellung und stark vereinfacht,

Fig. 2 eine Schaltungsanordnung zur Abtastung und Verarbeitung der elektrischen Meßsignale des Gegenstandes der Fig. 1,

Fig. 3 ein Zeigerdiagramm der Meßsignale,

Fig. 4 die Signalabtastung eines Signalzuges und

Fig. 5 eine andere Schaltanordnung zur Verarbeitung der elektrischen Meßsignale des Gegenstandes der Fig. 1.

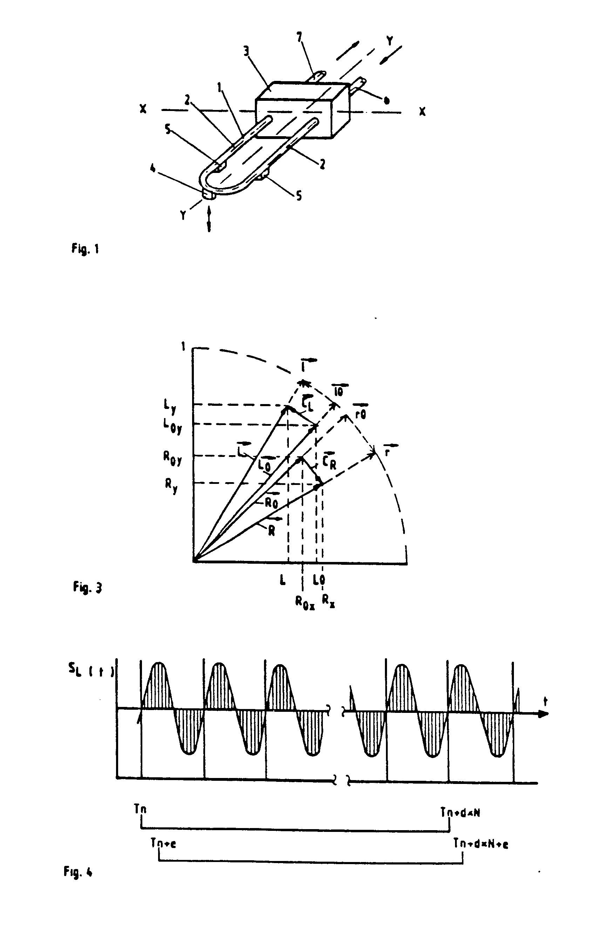

Das in Fig. 1 schematisch dargestellte Meßgerät dient der Durchflußmessung strömender Medien. Es besteht aus einer U-förmigen Rohrschleife 1, deren Schenkel 2 an einem massiven Lagerblock 3 befestigt sind. Auf der gegenüberliegenden Seite des Lagerblocks 3 ist ein Einströmende 6 und ein Ausströmende 7 vorgesehen. Diese beiden Enden sind an eine von dem zu messenden Medium durchströmte Rohrleitung (nicht dargestellt) angeschlossen. Das Medium durchströmt die Rohrschleife 1. Die U-förmige Rohrschleife 1 besteht aus einem federnden Werkstoff, so daß sie mittels eines Schwingungserzeugers 4 in Schwingungen versetzt werden kann, die senkrecht zu der von der Rohrschleife 1 eingespannten Ebene verlaufen. Der Schwingungserzeuger 4 kann beispielsweise ein Elektromagnet sein und ist zweckmäßig am äußeren Schwingende der Rohrschleife 1 angeordnet. An jedem Schenkel 2 ist ein Sensor 5 angebracht, der die mechanischen Schwingungen der Rohrschleife 1 erfaßt und in elektrische Meßsignale umsetzt. Strömt kein Medium durch die Rohrschleife 1, so schwingt sie im wesentlichen um die X-Achse. Sobald aber ein Medium d.h. eine Masse durch die Rohrschleife 1 strömt, greifen zusätzlich Corioliskräfte an, welche die Rohrschleife 1 im Takt der Schwingungen um die Y-Achse verwinden, wobei das Maß der

3

Verwindung bei der größten Geschwindigkeit der Schwingungsbewegungen am größten ist. Das Maß dieser Verwindung wird durch die Sensoren 5 ermittelt, aus deren elektrischen Meßsignalen die Durchflußmenge berechnet wird. Gemessen werden mithin die von dem Schwingungserzeuger 4 verursachten Schwingungen mit den durch die Coriolisbeschleunigung verursachten Überlagerungen, wobei die Corioliskräfte um +90 bzw. −90 phasenversetzt sind.

Die In Fig. 1 gewählte Darstellung eines Meßgerätes mit einer U-förmigen Rohrschleife 1 ist zur Erläuterung der Wirkungsweise stark schematisiert. Ein solches Meßgerät kann jedoch verschieden aufgebaut sein, beispielsweise auch zwei gegeneinander schwingende Rohrschleifen aufweisen. Die nachfolgend beschriebene Schaltungsanordnung zur Abtastung und Verarbeitung der vom Meßgerät erzeugten Meßsignale ist für alle Massendurchflußmeßgeräte mit schwingenden Rohrschleifen zur Ermittlung der Corioliskraft geeignet.

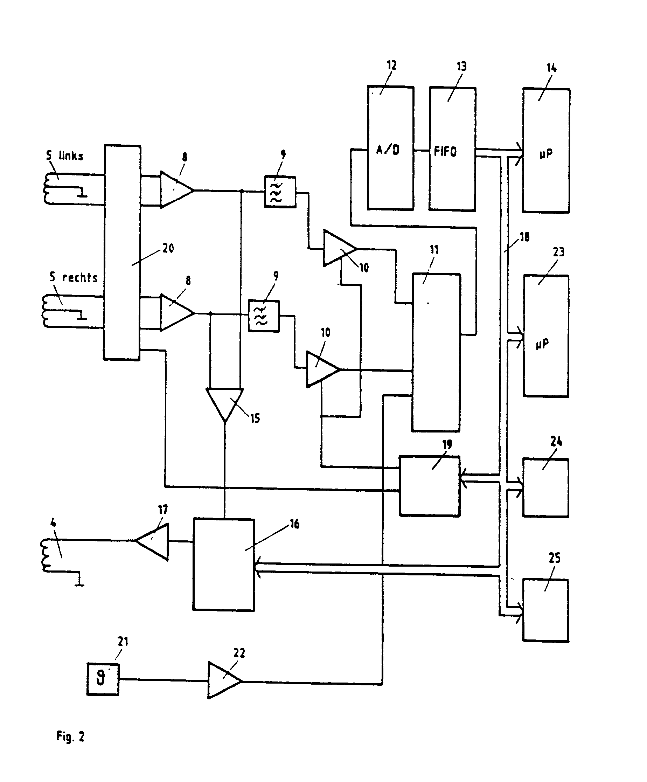

Die in Fig. 2 als Ausführungsbeispiel dargestellte Schaltungsanordnung dient der Abtastung und Verarbeitung der von den Sensoren 5 erzeugten Meßsignale. Jeder Sensor 5 erzeugt ein elektrisches Meßsignal mit einem sinusförmigen Verlauf fester Frequenz, der die durch die Corioliskräfte verursachten Überlagerungen enthält. Entsprechend gibt es einen linken und einen rechten Signalkanal. Jedes Meßsignal wird über einen Eingangsverstärker 8 und ein Antialiasing-Filter 9 einem Sample- and Hold-Verstärker 10 zugeführt. Diese geben ihre Signal mit einer bestimmten Abtastfrequenz über einen Multiplexer 11 an einen Analog/Digitalwandler 12. Die digitalisierten Meßwerte werden über einen Pufferspeicher (FIFO) 13 einem Mikrorechner 14 zugeführt, der die Auswertung der Meßsignale vornimmt und verschiedene Steuerungsfunktionen ausübt und dem weitere elektronische Bauteile, wie z.B. ein weiterer Mikroprozessor 23, ein beliebiger Programmspeicher 24 und ein Meßwertspeicher 25 zugeordnet sein können.

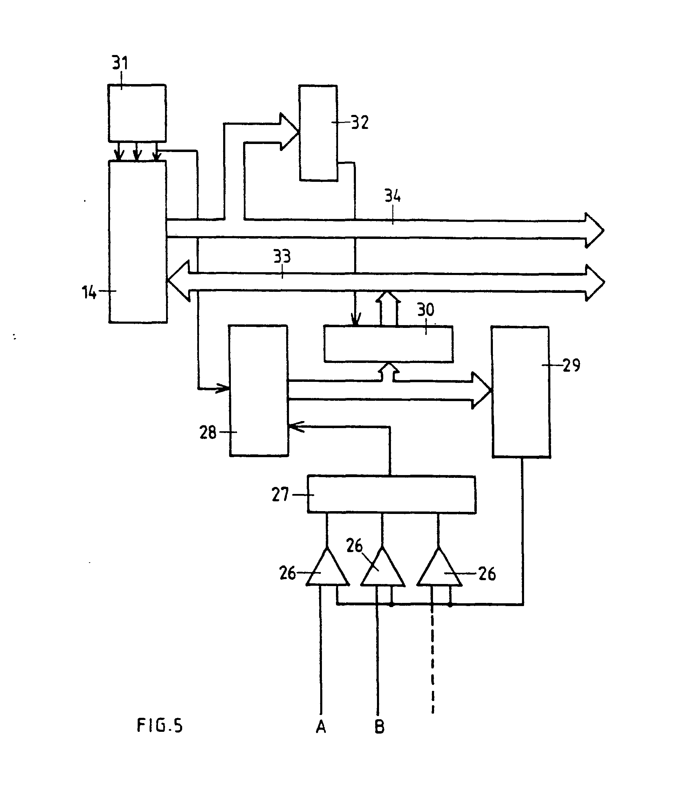

Fig. 3 zeigt die sinusförmigen Meßsignale in der Vektordarstellung. Strömt kein Medium durch die Rohrschleife, werden die Meßsignale des linken bzw. rechten Sensors 5 durch den Vektor $\vec{L_0}$ bzw. $\vec{R_0}$ repräsentiert. Diese beiden Signale weichen in der Regel infolge unterschiedlicher Empfindlichkeiten, geometrischen Abweichungen in der Rohrschleife u. dgl. voneinander ab. In Fig. 3 sind die Abweichungen jedoch aus Gründen der Anschaulichkeit überhöht dargestellt. Bei einem Massedurchfluß überlagern, sich die den Coriolisbewegungen entsprechenden Vektoren, die an dem linken Schenkel einen um +90 und an dem rechten Schenkel einen um −90 versetzten Zusatzvektor $\vec{C_L}$ bzw. $\vec{C_L}$ bilden. Gemessen werden die den Summenvektoren $\vec{L}$ bzw. $\vec{R}$ entsprechenden Meßsignale. Während bei den vorbekannten Meßgeräten der Verdrehungswinkel zwischen den Summenvektoren $\vec{L}$ und $\vec{R}$ durch Auszählung der Zeitdifferenz zwischen den Nulldurchgängen dieser Signalzüge ermittelt wird, werden erfindungsgemäß die kartesischen Vektorkomponenten der Summenvektoren $\vec{L}$ und $\vec{R}$ mit Hilfe einer digitalen Fourier-Transformation extrahiert und dann mittels eines Mikrorechners ausgewertet.

Die mit dem Masendurchflußmeßgerät durch Fourier-Transformation der digitalisierten Meßwerte erzielte Auswertung läßt sich anhand der folgenden mathematischen Betrachtung erläutern: Der Meßvektor $\vec{M}$ wird durch die Differenz der linken und rechten Vektoren $\vec{l} - \vec{r}$ gebildet, wobei

$$\vec{l} = \frac{\vec{L}}{|\vec{L}|} \quad \text{und} \quad \vec{r} = \frac{\vec{R}}{|\vec{R}|} \quad \text{und} \quad \vec{M} = \vec{l} - \vec{r}$$

ist. Aus dem Meßvektor $\vec{M}$ wird der gesuchte, den Massedurchfluß beschreibende Meßwert durch skalare Multiplikation des Meßvektors mit einem Einheitsvektor A, der senkrecht auf dem Mittelwert der beiden Meßvektoren $\vec{l}$ und $\vec{r}$ steht, gewonnen. Der Auswertevektor $\vec{A}$ hat die Form:

$$\vec{A} = \frac{1}{\vec{l} \cdot \vec{r}} \left( \frac{l + r}{2} \right)_{\perp}$$

Damit wird der Meßwert $M = (\vec{A}, \vec{M})$.

Gemessen werden die nicht normierten Summenvektoren $\vec{L} = (L_x, L_y)$ und $\vec{R} = (R_x, R_y)$.

Daraus ergeben sich die normierten Vektoren

$$\vec{l} = \frac{\vec{L}}{\vec{L}} = \frac{L_x}{\sqrt{L_x^2 + L_y^2}} \; , \quad \frac{L_y}{\sqrt{L_x^2 + L_y^2}}$$

$$\vec{r} = \frac{\vec{R}}{\vec{R}} = \frac{R_x}{\sqrt{R_x^2 + R_y^2}} \; , \quad \frac{R_y}{\sqrt{R_x^2 + R_y^2}}$$

oder mit den Abkürzungen

$$1 = \frac{L_y}{L_x} \qquad\qquad r = \frac{R_y}{R_x}$$

$$u = \frac{1}{\sqrt{1 + 1^2}} \qquad\qquad v = \frac{1}{\sqrt{1 + r^2}}$$

wird

$$\vec{1} = (u, u.1) \qquad\qquad \vec{r} = (v, v.r)$$

Damit schreibt sich der Auswertevektor

$$\vec{A} = \frac{1}{u.v\ (1 + 1.r)} \quad \frac{1}{2} \quad (-u.1\ -v.r,\ u\ +\ v)$$

Der Meßwert wird damit

$$M = \frac{1}{u.v\ (1 + 1.r)} \quad \frac{1}{2} \quad (-u.1\ -v.r, u\ +\ v)\ (u-v, u.1\ -v.r)$$

$$M = \frac{1 - r}{1 + 1.r}$$

Darin sind die Größen 1 und r die Quotienten der kartesischen Komponenten der Summenvektoren. In diesem mathematischen Ausdruck ist der den Massedurchfluß charakterisierende Meßwert M durch die kartesischen Koordinaten beschrieben, die durch eine Fourier-Transformation gewonnen werden.

Der für den Nulldurchfluß maßgebende Wert $M_o$ wird bei Nulldurchfluß mit Hilfe des gleichen mathematischen Ausdrucks bestimmt und bei der Messung von den eigentlichen Meßwerten M subtrahiert.

Die momentanen Spannungswerte der Wechselspannungssignale werden mit einer vorgegebenen Frequenz über einen bestimmten Zeitabschnitte abgetastet. Um Störungen durch Spiegelfrequenzen auszuschließen, sollte die Abtastfrequenz so hoch wie möglich liegen, wobei jedoch die Funktion der Analog/Digitalwandler und die Kapazität des Mikrorechners Grenzen setzen. Eine geeignete Abtastfrequenz kann beispielsweise bei 32 Abtastungen pro Periode der Wechselspannungssignale liegen. Beträgt die Frequenz der Wechselspannungssignale z.B. 100 Hz, so erfolgen in jedem Kanal 3200 Abtastungen pro Sekunde. Es können aber auch andere Abtastfrequenz gewählt werden, die aber immer etwa ein Vielfaches der Frequenz der Wechselspannungssignale betragen mussen (vgl. Fig. 4). Weiterhin erfaßt die Speicherung eine Abtastfolge über einen vorgegebenen Zeitabschnitte, d.g. über eine größere Anzahl Perioden der Wechselspannungssignale. Um eine schnellere Folge von Meßwerten zu bekommen, steuert der Mikrorechner 14 die Abtastung derart, daß die innerhalb des vorgegebenen Zeitabschnittes gespeicherten Multiplikationswerte eines jeden Kanals fortlaufend bei jeder Abtastung durch einen neuen Multiplikationswert ergänzt werden und im Rechner der älteste gespeicherte Multiplikationswert subtrahiert wird. Entsprechend steuert der Mikrorechner 14 die Sample- and Hold-Verstärker 10. Bei dieser Abtastmethode behält das Meßsignal innerhalb des Fensters seine Phasenlage bei, während sich das Fenster selbst gegenüber diesen Abtastwerten mit jedem neuen Abtastwert weiterbewegt (vg. Fig. 4). Alternativ kann die Phasenlage des Meßsignals bei jedem neuen Abtastwert mit dem Fenster schrittweise mitbewegt werden, d.h. jeden neuen Meßwert wird die Phase Null zugeordnet. In diesem Fall muß zwar die Summe aller Fourier-transformierten bei jeder Abtastung entsprechend der neuen Phasenlage gegenüber dem Bezugssystem korrigiert werden, bei Phase Null für den neuen Meßwert wird jedoch jeder neue Abtastwert mit cos(0)=1 bzw. sin (0)=0 multipliziert, so daß diese Multiplikationswerte lediglich zuaddiert bzw. am Ende des Fensters subtrahiert zu werden brauchen.

Zum Ausschluß von Störfrequenz ist zwischen den Eingangsverstärkern 8 und den Sample- and Hold-Verstärkern 10 jeweils eine Antialiasing-Filter 9 geschaltet, dessen Cut-Off-Frequenz im Bereich der Nyquist-Frequenz liegt, in dem vorgenannten Beispiel beit etwa 2 kHz.

Der Mikrorechner ist so ausgewählt, daß er die vom Analog/Digitalwandler über den Pufferspeicher 13 gelieferten Zahlenwerte bearbeitet und daraus den gesuchten Meßwert der Corioliskraft ausrechnet. Ein zugeordneter Mikroprozessor 23 arbeitet die Rohwerte je nach Bedarf in Anzeigesignale oder Steuersignale um.

Um ein Abdriften der Wechselspannungssignale am Eingang infolge von Temperaturänderungen, Alterung der Bauteile o. dgl. zu verhindern, sind die beiden Kanäle mit einem vom Mikrorechner 14 gesteuerten Kanalumschalter 20 ausgerüstet. Die Steuerung geschieht mittels der Abtast- und Umschaltsteuerung 19, die über den BUS 18 an den Mikrorechner 14 angeschlossen ist. Der Mikrorechner 14, der die Umschaltung steuert, berücksichtigt bei der Auswertung, ob das Meßsignal vom linken oder rechten Kanal kommt und ordnet es kanalrichtig ein.

Die Ausgänge der Sample- and Hold-Verstärker 10 sind über einen Multiplexer 11 an den Analog/Digitalwandler 12 angeschlossen, um eine wechselweise Eingabe der beiden Kanalsignale zu ermöglichen. Der zwischen dem Analog/Digitalwandler 12 und dem Mikrorechner 14 zwischengeschaltete Pufferspeicher 13 FIFO stellt dem Mikrorechner aufgabefreie Zeit für die Rechenoperation zur Verfügung.

Die Schaltungsanordnung ist so ausgeführt, daß der Schwingungserzeuger 4 durch Rückkopplung von den Wechselspannungssignalen gesteuert wird. Hierfür ist eine digitaler Amplitudenregler 16 vorgesehen, dessen Eingang über einen Verstärker 15 an die beiden Kanäle der Wechselspannungssignale angeschlossen ist, der einen Mittelwert bildet. Der digitale Sollwert der Amplitude wird vom Mikrorechner 14 in Abhängigkeit vom Meßwert vorgegeben. Der Ausgang des digitalen Amplitudenreglers 16 ist über einen Operationsverstärker mit dem Schwingungserzeuger 4 verbunden. Alternativ ist auch eine analoge Steuerung möglich.

Die in Fig. 2 vorgesehene Schaltung kann für eine Umsetzung der analogen Wechselspannungssignale vielfältig umgewandelt werden. So kann beispielsweise jeder Sample- and Hold-Verstärker 10 über einen eigenen Analog/Digitalwandler an den Mikroprozessor angeschlossen sein. Eine weitere Möglichkeit besteht in der Verwendung von Differenzverstärkern, die über einen Digital/Analogwandler rückgekoppelt sind. Sample- und Hold-Verstärker können bei der in Fig. 5 dargestellten Schaltungsanordnung entfallen. Bei dieser Ausführung werden die Meßsignale jeweils einem Komparator 26 zugeführt, der diese mit der Ausgangsspannung eines Digital/Analogwandlers 29 vergleicht. Die Komparatoren 26 schalten über einen Multiplexer 27 den Zählrichtungseingang eines binären Synchronzählers 28, dessen Zählerstand den binären Eingangswert des Digital/Analogwandlers 29 bildet. Beispielsweise wird eine 12 Bit Synchronzähler mittels eines Frequenzgenerators 31 getaktet. Sind bei dem Vergleicht die Meßsignale größer als die Ausgangsspannung des Digital/Analogwandlers 29, zählt der Synchronzähler 28 vorwärts, andernfalls rückwärts. Ist das Meßsystem eingependelt, so schaltet die letzte Stelle des Synchronzählers 28 wechselweise vorwärts und rückwärts. Der Synchronzähler 28 ist über einen Pufferspeicher 30 an den Mikrorechner 14 angeschlossen. Der Schaltungsanordnung kann ein Adresskodierer zugeordnet sein. Mit 33 ist der zugehörige Datenbus und mit 34 der Adreßbus bezeichnet.

## Patentansprüche

1. Massendurchflußmeßgerät für strömende Medien mit Einrichtungen zur Ermittlung der Corioliskraft bestehend aus wenigstens einer Rohrschleife (1), die mit ihren beiden Schenkeln (2) an einem massiven Lagerblock (3) befestigt sowie mit einem Schwingungserzeuger (4), seitlichen Sensoren (5), welche die mechanischen Schwingungen der Rohrschleife (1) in analoge elektrische Wechselspannungssignale umsetzen und mit einer zweikanaligen elektronischen Schaltungsanordnung versehen ist, welche aus den Wechselspannungssignalen ein dem Massedurchfluß proportionales Meßsignal bildet, dadurch gekennzeichnet, daß die momentanen Spannungswerte der Wechselspannungssignale mittels eines Analog/Digitalwandlers in digitale Meßwerte umgesetzt und einem Mikrorechner (14) zugeführt werden, der die digitalisierten Meßwerte einer Fourier-transformation unterwirft, indem er diese mit den der Abtastung entsprechenden Sinus- und Cosinuswerten multipliziert und diese Multiplikationswerte summiert.

2. Massendurchflußmeßgerät nach Anspruch 1, dadurch gekennzeichnet, daß der Mikrorechner (14) eine Abtastfrequenz liefert, die ein Vielfaches der Frequenz der Wechselspannungssignale ist.

3. Massendurchflußmeßgerät nach Anspruch 1 oder 2, dadurch gekennzeichnet, daß der Mikrorechner (14) die Abtastung derart steuert, daß die innerhalb eines vorgegebenen Zeitabschnittes gespeicherten Multiplikationswerte fortlaufend bei jeder Abtastung durch einen neuen Multiplikationswert ergänzt werden und der älteste gespeicherte Multiplikationswert im Rechner abgezogen wird.

4. Massendurchflußmeßgerät nach einem der Ansprüche 1 bis 3, dadurch gekennzeichnet, daß von den Wechselspannungssignalen mit einer vorgegebenen Abtastfrequenz fortlaufend die zu gleichen Zeitpunkten jeweils vorhandenen Amplituden von je einem Sample- and Hold-Verstärker (10) aufgenommen und mittels eines Analog/Digitalwandlers (12) in digitale Meßwerte umgewandelt werden.

5. Massendurchflußmeßgerät nach einem der Ansprüche 1 bis 4, dadurch gekennzeichnet, daß die Wechselspannungssignale über einen Eingangsverstärker (8) und ein Antialiasing-Filter (9) an den betreffenden Sample- and Hold-Verstärker (10) angeschlossen sind.

6. Massendurchflußmeßgerät nach einem der Ansprüche 1 bis bis 5, dadurch gekennzeichnet, daß die beiden, die Wechselspannungssignale liefernden Kanäle mit einem vom Mikrorechner (14) gesteuerten Kanalumschalter (20) ausgestattet sind.

7. Massendurchflußmeßgerät nach einem der Ansprüche 1 bis 6, dadurch gekennzeichnet, daß die Ausgänge der Sample- and Hold-Verstärker (10) über einen Multiplexer (11) an den Analog/Digitalwandler (12) angeschlossen sind.

8. Massendurchflußmeßgerät nach einem der Ansprüche 1 bis 7, dadurch gekennzeichnet, daß der Ausgang des Analog/Digitalwandlers (12) über einen Pufferspeicher (13) FIFO an den Mikrorechner (14) angeschlossen ist.

9. Massendurchflußmeßgerät nach einem der Ansprüche 1 bis 3, dadurch gekennzeichnet, daß jeweils ein Komparator (26) die Wechselspannungssignale mit der Ausgangsspannung eines Digital/Analogwandlers (29) vergleicht und den Zählrichtungseingang eines binären Synchronzählers (28) schaltet, dessen Zählerstand den binären Eingangswert des Digital/Analogwandlers (29) bildet und dem Mikrorechner (14) zugeführt wird.

10. Massendurchflußmeßgerät nach Anspruch 9, dadurch gekennzeichnet, daß der Zählrichtungseingang des binären Synchronzählers (28) über einen Multiplexer (27) an die Komparatoren (26) angeschlossen ist.

11. Massendurchflußmeßgerät nach Anspruch 9 oder 10, dadurch gekennzeichnet, daß der Ausgang des binären Synchronzählers (28) über einen Pufferspeicher (30) an den Mikrorechner (14) angeschlossen ist.

**Revendications**

1. Débitmètre massique pour milieux en ecoulement, comportant des dispositifs pour déterminer la force de Coriolis et constitué par au moins une boucle tubulaire (1), qui est fixée par ses deux branches (2) à un bloc de support massif (3), ainsi qu'un générateur de vibrations (4), des capteurs latéraux (5), qui convertissent les vibrations mécaniques de la boucle tubulaire (1) en des signaux électriques analogiques de tension alternative, et est équipée d'un montage électronique à deux canaux, qui forme, à partir des signaux de tension alternative, un signal de mesure proportionnel au débit massique, caractérisé en ce que valeurs instantanées de tension des signaux de tension alternative sont converties, à l'aide d'un convertisseur analogique/numérique, en des valeurs de mesure numériques et sont envoyées à un micro-ordinateur (14), qui soumet les valeurs de mesure numérisées à une transformation de Fourier, par le fait qu'il multiplie ces valeurs de mesure par les valeurs de sinus et de cosinus, qui correspondent à l'échantillonnage, et additionne ces valeurs obtenues par multiplication.

2. Débitmètre massique selon la revendication 1, caractérisé en ce que le micro-ordinateur (14) fournit une fréquence d'échantillonnage, qui est un multiple de la fréquence des signaux de tension alternative.

3. Débitmètre massique selon la revendication 1 ou 2, caractérisé par le fait que le micro-ordinateur (14) commande l'exploration de manière que les valeurs de multiplication mémorisées pendant un intervalle de temps prédéterminé, sont complétées en permanence, lors de chaque exploration, par une nouvelle valeur de multiplication, et que la plus ancienne valeur de multiplication mémorisée dans le calculateur est supprimée.

4. Débitmètre massique selon l'une quelconque des revendications 1 à 3, caractérisé en ce que les amplitudes, qui sont respectivement présentes aux mêmes instants, de signaux de tension alternative possédant une fréquence d'échantillonnage prédéterminée sont enregistrées en permanence par des amplificateurs d'échantillonnage et de maintien respectifs (12) et sont converties au moyen d'un convertisseur analogique/numérique (12) en des valeurs de mesure numériques.

5. Débitmètre massique selon l'une quelconque des revendications 1 à 4, caractérisé par le fait que les signaux de tension alternative sont appliqués, par l'intermédiaire d'un amplificateur d'entrée (8) et d'un filtre d'antialiasing (suppression des signaux fantômes) (9), à l'amplificateur d'échantillonnage et de mantien (10) considéré.

6. Débitmètre massique selon l'une quelconque des revendications 1 à 5, caratérisé en ce que les deux canaux délivrant les signaux de tension alternative sont équipés d'un commutateur de canaux (20) commandé par le micro-ordinateur (14).

7. Débitmètre massique selon l'une quelconque des revendications 1 à 6, caractérisé en ce que les sorties des amplificateurs d'échantillonnage et de maintien (10) sont raccordées au convertisseur analogique/numérique (12) par l'intermédiaire d'un multiplexeur (11).

8. Débitmètre massique selon l'une quelconque des revendications 1 à 7, caractérisé en ce que la sortie du convertisseur analogique/numérique (12) est raccordée au micro-ordinateur (14) par l'intermédiaire d'une mémoire tampon (13) FIFO.

9. Débitmètre massique selon l'une quelconque des revendications 1 à 3, caractérisé en ce que respectivement un comparateur (26) compare les signaux de tension alternative à la tension de sortie d'un convertisseur numérique/analogique (29) et branche l'entrée du sens de comptage d'un compteur synchrone binaire (28), dont l'état de comptage forme la valeur binaire d'entrée du convertisseur numérique/analogique (29) et est envoyé au micro-ordinateur (14).

10. Débitmètre massique selon la revendication 9, caractérisé en ce que l'entrée du sens de comptage du compteur synchrone binaire (28) est raccordée par l'intermédiaire d'un multiplexeur (27) aux comparateurs (26).

11. Débitmètre massique selon la revendication 9 ou 10, caractérisé en ce que la sortie du compteur synchrone binaire (28) est raccordée par l'intermédiaire d'une mémoire tampon (30) au micro-ordinateur (14).

# EP 0 282 552 B1

**Claims**

1. A mass flow meter for flowing media with equipment to determine the Coriolis force, consisting of at least one tubular loop (1), the two limbs (2) of which are fixed to a massive support block (3) and with a vibration producer (4) and lateral sensors (5) that convert the mechanical oscillations of the tubular loop (1) into analogue electrical alternating voltage signals, and that is provided with a two-channel electronic circuit arrangement that forms from the alternating voltage signals a measurement signal proportional to the mass flow, characterized in that the instantaneous voltage values of the alternating voltage signals are each converted into digital measurement values by means of an analogue/digital converter and are supplied to a microcomputer (14) that subjects the digitalized measurement values to a Fourier transform, in that it multiplies these values by the sine and cosine values corresponding to the sampling points and adds up these multiplication values.

2. A mass flow meter according to Claim 1, characterized in that the microcomputer (14) supplies a sampling frequency that is a multiple of the frequency of the alternating voltage signals.

3. A mass flow meter according to Claim 1 or 2 characterized in that the microcomputer (14) controls the sampling in such a way that the multiplication values that have been stored within a specified time interval are continually added to at each sampling by a new multiplication value and the oldest-stored multiplication value is subtracted in the computer.

4. A mass flow meter according to Claims 1 to 3, characterized in that the amplitudes present at the same instants from the alternating voltage signals at a specified sampling frequency are each continually received by a sample and hold amplifier (10) and are converted into digital measured values by an analogue/digital converter.

5. A mass flow meter according to one of Claims 1 to 4, characterized in that the alternating voltage signals are connected to the appropriate sample and hold amplifier (10) via an input amplifier (8) and an antialiasing filter (9).

6. A mass flow meter according to one of Claims 1 to 5, characterized in that the two channels supplying the alternating voltage signals are equipped with a channel change-over switch (20) controlled from the microcomputer (14).

7. A mass flow meter according to one of Claims 1 to 6, characterized in that the outputs of the sample and hold amplifier (10) are connected to the analogue/digital converter (12) via a multiplexer (11).

8. A mass flow meter according to one of Claims 1 to 7, characterized in that the output of the analogue/digital converter (12) is connected to the microcomputer (14) via a buffer store (13) FIFO.

9. A mass flow meter according to one of Claims 1 to 3, characterized in that in each case a comparator (26) compares the alternating voltage signals with the output voltage of a digital/analogue converter (29) and switches the counting direction input of a binary synchronous counter (28), the counter position of which forms the binary input value of the digital/analogue converter (29) and is supplied to the microcomputer (14).

10. A mass flow meter according to Claim 9, characterized in that the counting direction input of the binary synchronous counter (28) is connected to the comparators (26) via a multiplexer (27).

11. A mass flow meter according to Claim 9 or 10, characterized in that the output of the binary synchronous counter (28) is connected to the microcomputer (14) via a buffer store (30).

EP 0 282 552 B1

Fig. 1

Fig. 3

Fig. 4

1

Fig. 2

FIG.5